# EUROPEAN PATENT SPECIFICATION

(11) **EP 4 212 585 B1**
(45) Date of publication and mention of the grant of the patent: **02.12.2026**
(21) Application number: 21879499.8
(22) Date of filing: 14.10.2021
(51) Int. Cl.: C08L 29/04, C08F 210/02, C08F 218/08, C08K 3/10, C08K 3/26, C08K 3/32, C08K 3/38, C08K 5/09

(54) **ETHYLENE-VINYL ALCOHOL COPOLYMER COMPOSITION, AND PREPARATION METHOD THEREFOR**
ETHYLEN-VINYLALKOHOL-COPOLYMERZUSAMMENSETZUNG UND HERSTELLUNGSVERFAHREN DAFÜR
COMPOSITION DE COPOLYMÈRE ÉTHYLÈNE-ALCOOL VINYLIQUE, ET PROCÉDÉ DE PRÉPARATION ASSOCIÉ

(30) Priority: 15.10.2020 CN 202011103182; 15.10.2020 CN 202011104215
(43) Date of publication of application: 19.07.2023
(73) Proprietor: China Petroleum & Chemical Corporation, Beijing 100728 (CN); Sinopec Chongqing SVW Chemical Co., Ltd., Chongqing 401254 (CN)
(72) Inventor: DOU, Yuqin, Chongqing 401254 (CN); WANG, Qingquan, Chongqing 401254 (CN); HU, Lamei, Chongqing 401254 (CN); HE, Lingzhi, Chongqing 401254 (CN); HUANG, Yingbin, Chongqing 401254 (CN); WANG, Wen, Chongqing 401254 (CN); WAN, Siquan, Chongqing 401254 (CN)
(74) Representative: karo IP
(86) International application number: PCT/CN2021/123860
(87) International publication number: WO 2022/078457

(56) References cited:
- EP-B1- 0 386 720
- EP-B1- 2 196 312
- EP-B1- 2 832 787
- CN-A- 1 616 536
- CN-A- 101 910 294
- CN-A- 105 623 163
- US-A- 5 118 743

## Description

### CROSS REFERENCE TO RELATED APPLICARTIONS

The application claims benefit of the Chinese patent application No. "202011103182.7", filed on October 15, 2020, and the Chinese patent application No. "202011104215.X", filed on October 15, 2020.

### TECHNICAL FIELD

The present invention involves with an ethylene-vinyl alcohol copolymer composition and a preparation method therefor.

### BACKGROUND ART

EVOH resins have excellent odor barrier properties, transparency and glossiness, and are resistant to grease, chemicals, ultraviolet light and other radiation rays, and exhibit desirable mechanical properties, strength and tensile modulus, thus can be used as composite packaging films, foaming processes, hollow containers and barrier layers for meat, grease, industrial solvents, pesticides. In addition, the EVOH resins may be compounded with other materials to form the fire-resistant, antibacterial and anti-oxidant materials.

However, EVOH resins have poor heat resistance, and are prone to cause yellowing of the product at high temperatures and generation of the thermal decomposition products during the fabrication process (which is typically melt processing), thereby affecting the product quality.

Currently, the problem is mainly solved by adding additives, for example, CN105623163A improves thermal stability of a copolymer composition containing an ethylene and vinyl alcohol structure unit by adding 0.1-4.0% by mass of component B (an acid selected from one of inorganic acids or organic carboxylic acids or a mixture thereof, the organic carboxylic acid is selected from polycarboxylic acid having 2-20 carbon atoms), 0.01-1.8% of component C (an organic phenol or amine compound) and 0.1-4.0% of component D (an alkali metal or an alkaline earth metal salt) relative to the mass of copolymer composition. It is alleged in the invention that the prepared composition has the initial decomposition Temperature (T0) of 264°C and 236°C and the decomposition temperature (Td) of 326°C and 311°C under nitrogen gas and air atmosphere, respectively. However, the solution has limited improvement in regard to the thermal stability, and cannot meet the application requirement of higher processing temperature.

WO0020211A1 increases the stability of EVOH resin composition by adding the boron compounds such as boric acid, borate ester and borate, which can raise the initial decomposition temperature by 40-50°C. However, the EVOH composition obtained with the method has a problem of an increased melt viscosity during the melt processing, thereby leading to the inconvenience of processing.

EP 0 386 720 B1 discloses compositions comprising a saponified product of an ethylene-vinyl acetate copolymer having an ethylene content of 20 to 80 mol% and a saponification degree of vinyl acetate component of at least 95 mol%, said composition containing 20 to 200 ppm as converted to alkali metal of an alkali metal acetate, 30 to 250 ppm of acetic acid, and 5 to 500 ppm as converted to phosphate ion of phosphoric acid or an alkali metal hydrogenphosphate, and having a content ratio of acetic acid/alkali metal acetate of 0.1 to 1 and the flow characteristic that the extrusion rate does not substantially increase for at least 10 hours in the relationship between the heating time and the extrusion rate with a capillary rheometer (Koka Flow Tester) at at least one temperature from 10 to 80°C above the melting point.

EP 2 196 312 B1 describes An ethylene-vinyl alcohol copolymer resin composition containing from 100 to 5000 ppm, in terms of boric acid (H 3 BO 3 ), of a boron compound, from 100 to 1000 ppm, in terms of the free acid, of a carboxylic acid and/or its salt, and from 50 to 300 ppm, in terms of the metal, of an alkali metal salt, and having an ethylene content of from 25 to 45 mol% and a degree of saponification of at least 99 %.

EP 2 832 787 B1 provides a resin composition containing (A) an ethylene-vinyl alcohol copolymer and (B) an unsaturated aldehyde (B), in which the content of the unsaturated aldehyde (B) with respect to the resin composition containing the ethylene-vinyl alcohol copolymer is 0.01 ppm or more and 100 ppm or less. The unsaturated aldehyde (B) is preferably crotonaldehyde, 2,4-hexadienal, 2,4,6-octatrienal or a combination thereof. In addition, it is preferred that the resin composition further contains a boron compound, and the content of the boron compound is 100 ppm or more and 5,000 ppm or less. Also, it is preferred that the resin composition further contains a conjugated polyene compound, and the content of the conjugated polyene compound is 0.01 ppm or more and 1,000 ppm or less.

CN 1 616 536 A involves a kind of resin composition, through make EthyleneVinyl Alcohol Copoyhner and contain at least mono additive additive selected from alkali metal salt (A) and boride (B) and contain dioxo Take carbonic aqueous solution, contact, mix refining with thermoplastic resin (G) fusion except EthyleneVinyl Alcohol Copoyhner, there is little content of its carboxylate. Like this, can offer generating odor little, be suitable for uses such as food packaging,etc., resin composition comprising thermoplastic resin beyond EVOH and EVOH, in addition this invention offers the preparation method not discharging carboxylic acid such as acetate, this resin composition which considers the environmental challenge to the surrounding environment.

US 5 118 743 A provides a multilayered structure comprising a layer of an ethylene-vinyl alcohol copolymer composition having specific flow characteristics in the relationship between the heating time and the extrusion rate measured with a capillary rheometer (Koka Flow Tester), and a hydrophobic thermoplastic resin layer.

### SUMMARY OF THE INVENTION

The invention aims to overcome the defect in the prior art that the EVOH resin composition suffer from poor thermal stability, thereby providing an EVOH resin composition having higher thermal stability and a preparation method therefor.

A first aspect of the invention provides an ethylene-vinyl alcohol copolymer composition, the composition contains an ethylene-vinyl alcohol copolymer, element potassium and element sodium, characterized in that the mass ratio of element sodium to element potassium is 0.1:1 to 1:1, preferably 0.2:1 to 0.8:1, more preferably 0.3:1 to 0.5:1;
the composition further comprises a monocarboxylic acid R1COOH, R1 represents a C1-5 alkyl group, wherein the monocarboxylic acid is contained in an amount of 100-3,000ppm, relative to the mass of ethylene-vinyl alcohol copolymer;
the composition further comprises an acyl-containing carboxylic acid; wherein the acyl-containing carboxylic acid is contained in an amount of 50-1,000ppm, relative to the mass of ethylene-vinyl alcohol copolymer;
the total amount of element potassium and element sodium is 100-3,000ppm, relative to the mass of ethylene-vinyl alcohol copolymer;
the contents of element potassium and element sodium are measured using the Inductively Coupled Plasma Atomic Emission Spectrometry (ICP-0ES);
the contents of the monocarboxylic acid are measured with the ion chromatography;
the contents of the acyl-containing carboxylic acid is measured with the ion chromatography.

A second aspect of the invention provides a preparation method of ethylene-vinyl alcohol copolymer composition, characterized in that the method comprises subjecting the ethylene-vinyl acetate copolymer obtained from the polymerization reaction to an alcoholysis and molding granulation, then washing to remove most of element sodium, subsequently adding a potassium source in an amount such that the mass ratio of element sodium to element potassium is 0.1:1 to 1:1, preferably 0.2:1 to 0.8:1, more preferably 0.3:1 to 0.5:1; wherein the washing generally includes water scrubbing and acid pickling; and the acid pickling is carried out using a monocarboxylic acid and an acyl-containing carboxylic acid; wherein the washing is performed such that the total amount of element potassium and element sodium is 100-3,000ppm, relative to the mass of ethylene-vinyl alcohol copolymer.

In the present invention, by controlling the contents of element sodium and element potassium in an EVOH resin composition to fall within a specific proportion range, the heat resistance of the resulting EVOH resin composition is greatly improved, the initial decomposition temperature can be increased to 370-400°C, the maximum decomposition temperature can be increased to 400-440°C, and thus EVOH resin can adapt to the process requirement for a higher processing temperature. Moreover, further adding acyl-containing carboxylic acid and a phosphorus-containing compound/boron-containing compound can improve the thermal yellowing resistance of the EVOH resin composition, where the value of the yellowing index (YI) after 5-hour thermal treatment at 150°C, is increased by 15 or less.

The preparation method of EVOH resin composition provided by the invention is simple and easy to operate, and can facilitate the industrial production.

### DESCRIPTION OF THE PREFERRED EMBODIMENT

The ethylene-vinyl alcohol copolymer composition, comprising ethylene-vinyl alcohol copolymer as the main ingredient, is obtained by alcoholysis after copolymerization of the ethylene-vinyl acetate; wherein the element sodium is brought from a byproduct produced during alcoholysis of ethylene-vinyl acetate copolymer, the content of element sodium is usually reduced by the subsequent process of water scrubbing and acid pickling. It is generally considered that the content of element sodium shall be controlled within a low range as far as possible, in order to obtain the ethylene-vinyl alcohol copolymer composition with desirable performance.
The inventors of the present invention have surprisingly discovered that the heat resistance of the produced EVOH resin composition can be substantially improved by adding element potassium after the alcoholysis and washing process, and controlling the mass ratio of element sodium to element potassium within a specific range of 0.1:1 to 1:1, preferably 0.2:1 to 0.8:1, more preferably 0.3:1 to 0.5: 1;
the composition further comprises a monocarboxylic acid R1COOH, R1 represents a C1-5 alkyl group, wherein the monocarboxylic acid is contained in an amount of 100-3,000 ppm, relative to the mass of ethylene-vinyl alcohol copolymer;
the composition further comprises an acyl-containing carboxylic acid; wherein the acyl-containing carboxylic acid is contained in an amount of 50-1,000 ppm, relative to the mass of ethylene-vinyl alcohol copolymer;
the total amount of element potassium and element sodium is 100-3,000ppm, relative to the mass of ethylene-vinyl alcohol copolymer;
the contents of element potassium and element sodium are measured using the Inductively Coupled Plasma Atomic Emission Spectrometry (ICP-0ES);
the contents of the monocarboxylic acid are measured with the ion chromatography;
the contents of the acyl-containing carboxylic acid is measured with the ion chromatography.

The better effects can be obtained by controlling the content of element sodium within a certain range. The total amount of element potassium and element sodium is 100-3,000ppm, preferably 200-2,000ppm, further preferably 500-1,000ppm, relative to the mass of ethylene-vinyl alcohol copolymer.

Preferably, the element potassium is present in an ionic form, more preferably in a form of potassium salt, and further preferably the potassium salt is potassium carbonate and/or potassium bicarbonate. Potassium carbonate and potassium bicarbonate can be used for producing the superior effects than the inorganic potassium salts (e.g., potassium nitrate, potassium phosphate, potassium diphydrogen phosphate, dipotassium phosphate, potassium sulfate, potassium chloride) and the organic potassium salts (e.g., potassium acetate, potassium formate).

In order to prevent the EVOH resin composition from coloring during the melt molding process, according to a preferred embodiment of the present invention, the EVOH resin composition further comprises a monocarboxylic acid, which may be various arboxylic acid capable of achieving the above-described effects containing one COOH and not containing acyl, the monocarboxylic acid is preferably represented by the structural formula R₁COOH, wherein R₁ is an alkyl group containing 1-8, more preferably 1-5 carbon atoms, such as methyl, ethyl, propyl, isopropyl, butyl, isobutyl, tert-butyl; the monocarboxylic acid is further preferably one or more selected from the group consisting of formic acid, acetic acid, propionic acid and butyric acid.

The monocarboxylic acid is contained in an amount of 100-3,000ppm, preferably 150-2,000ppm, further preferably 300-1,000ppm, relative to the mass of ethylene-vinyl alcohol copolymer.

The inventors of the present invention have surprisingly found that the thermal yellowing resistance of the EVOH resin composition can be further improved by arranging that the EVOH resin composition containing a certain amount of acyl-containing carboxylic acid. Therefore, the composition further comprises an acyl-containing carboxylic acid. The acyl-containing carboxylic acid is contained in an amount of 50-1,000ppm, preferably 100-500ppm, further preferably 200-350ppm, relative to the mass of ethylene-vinyl alcohol copolymer.

When the composition of the present invention comprises both a monocarboxylic acid and an acyl-containing carboxylic acid, the acyl-containing carboxylic acid is contained in an amount of 50-1,000ppm, more preferably 100-500ppm; the monocarboxylic acid is contained in an amount of 100-3,000ppm, preferably 150-2,000ppm, more preferably 200-1,500ppm, relative to the mass of ethylene-vinyl alcohol copolymer.

The acyl-containing carboxylic acid may be various substances containing both acyl -C (=O)- and carboxyl -COOH in molecules, the number of acyl and carboxyl may be one or more, and one or more carbon atoms may be disposed between the acyl and carboxyl, and the acyl is preferably acetyl CH₃-C(=O)-. The acyl-containing carboxylic acid may contain one or more aromatic rings. The acyl-containing carboxylic acid may contain 3-10 carbon atoms. Preferably, the acyl-containing carboxylic acid is one or more selected from the group consisting of acetoacetic acid, levulinic acid, acetobutyric acid, acetylsalicylic acid, acetylsuccinic acid and acetylbenzoic acid.

It is preferable in the present invention that the acyl-containing carboxylic acid is represented by the structural formula R₂COR₃COOH, wherein R₂ is a C1-5 alkyl group, such as methyl, ethyl, propyl, isopropyl, butyl, isobutyl, tert-butyl, and further preferably methyl; that is, the alkyl-containing carboxylic acid is an acetyl-containing carboxylic acid, R₃ is a straight or branched chain alkylidene group having 1-5 carbon atoms, such as methylene, ethylidene and propylidene, and further preferably, R₃ and R₁ have the same number of carbon atoms. The present inventors have discovered that by arranging the alkyl-containing carboxylic acid such that R₃ and R₁ have the same number of carbon atoms, both the heat-resistant stability and thermal yellowing resistance of the produced EVOH composition are greatly improved.

The composition of the present invention may further comprise element boron and/or element phosphorus. The content of element boron calculated in terms of boric acid H₃BO₃ is 50-1,000ppm, preferably 50-500ppm, and the content of element phosphorus calculated in terms of H₃PO₄ is 50-1,000ppm, preferably 100-500ppm, relative to the mass of the ethylene-vinyl alcohol copolymer. Element boron may be present in the form of various boron-containing compounds, which may be boric acid, borate ester or borate salt. The phosphorus-containing compound may be phosphoric acid and phosphate salt, the phosphate salt is not particularly limited herein, it is preferably an alkali metal salt of phosphoric acid. Specifically, the phosphate salt may be one or more selected from the group consisting of potassium phosphate, sodium phosphate, ammonium phosphate, diammonium phosphate, ammonium dihydrogen phosphate, dipotassium phosphate, disodium phosphate, potassium dihydrogen phosphate, sodium dihydrogen phosphate. It should be noted that when the phosphorus compound is various potassium salt of phosphoric acid, the amount of potassium thereof is included in the content of element potassium in the composition.

In the present invention, the contents of element potassium and element sodium are measured using the Inductively Coupled Plasma Atomic Emission Spectrometry (ICP-0ES). The contents of the monocarboxylic acid, the acyl-containing carboxylic acid and the phosphorus compound are measured with the ion chromatography. The contents of the boron compound are determined by atomic emission spectroscopy after ashing the sample.

In the present invention, the ethylene-vinyl acetate copolymer may be EVOH copolymer obtained by various specifications and processes, and preferably, the ethylene-vinyl acetate copolymer has a melt index (190°C, 2160g) of 0.5-10g/10 min.

According to a preferred embodiment of the invention, the EVOH resin composition contains ethylene-vinyl alcohol copolymer, acetic acid, potassium salts and sodium salts; the acetic acid is contained in an amount of 100-3,000ppm, relative to the mass of ethylene-vinyl alcohol copolymer; the potassium salts and sodium salts are used in an amount such that the total amount of sodium ions contained in sodium salts and potassium ions contained in potassium salts is 100-3,000ppm, relative to the mass of ethylene-vinyl alcohol copolymer, and the mass ratio of sodium ions contained in sodium salts and potassium ions contained in potassium salts is 0.1:1 to 1:1.

The ethylene-vinyl acetate copolymer can be prepared with the conventional method in the prior art, for example, it may be prepared through the polymerization reaction; the solvent used in the polymerization reaction is an alcohol solvent, and the initiator used in the polymerization reaction is preferably an azo type initiator or a peroxide type initiator.

A second aspect of the invention provides a preparation method of ethylene-vinyl alcohol copolymer composition, characterized in that the method comprises subjecting the ethylene-vinyl acetate copolymer obtained from the polymerization reaction to an alcoholysis and molding granulation, then washing to remove most of element sodium, subsequently adding a potassium source in an amount such that the mass ratio of element sodium to element potassium is 0.1:1 to 1:1, preferably 0.2:1 to 0.8:1, more preferably 0.3:1 to 0.5:1.

Preferably, the potassium source is a potassium salt, and further preferably, the potassium salt is potassium carbonate and/or potassium bicarbonate.

Preferably, said washing process reduces the content of element sodium to 50-2,000ppm, the potassium salt is further added to control the total amount of sodium ions and potassium ions contained in the potassium salts within the desired range.

The washing generally includes water scrubbing and acid pickling.

In the present invention, the acid pickling is carried out using a monocarboxylic acid and an acyl-containing carboxylic acid.

Preferably, the mass ratio of the monocarboxylic acid and the ethylene-vinyl alcohol copolymer may be 0.0001:1 to 0.1:1, preferably 0.001:1 to 0.05:1, more preferably 0.015:1 to 0.05:1.

Further preferably, the mass ratio of the acyl-containing carboxylic acid to the monocarboxylic acid is 0.1:1 to 1:1, preferably 0.2:1 to 0.8:1, more preferably 0.2:1 to 0.5:1.

The types of monocarboxylic acid and acyl-containing carboxylic acid are as described above.

It is further preferred that the method further comprises adding a phosphorus-containing compound and/or a boron-containing compound into the ethylene-vinyl acetate copolymer obtained after the acid pickling process.

Preferably, the phosphorus-containing compound is added in an amount of 0.0002-0.001 parts by weight, relative to 1 part by weight of the ethylene-vinyl acetate copolymer.

Preferably, the boron-containing compound is added in an amount of 0.0001-0.001 parts by weight, relative to 1 part by weight of the ethylene-vinyl acetate copolymer.

The boron-containing compound and the phosphorus-containing compound may be added during the process of adding the potassium salt; the potassium salt, the boron-containing compound, and the phosphorus-containing compound may be added individually.

The manner of adding the potassium salt, the boron-containing compound, and the phosphorus-containing compound is not particularly limited herein, it is preferable that the compounds are dissolved with water, the solution is then added into the ethylene-vinyl alcohol copolymer and mixed uniformly. The concentration of said solution is not particularly limited herein, it may be various concentrations as long as the potassium salt, the boron-containing compound and the phosphorus-containing compound can be loaded onto the ethylene-vinyl alcohol copolymer. Since the ethylene-vinyl alcohol copolymer has a certain pore structure, the potassium salt, the boron-containing compound and the phosphorus-containing compound can be loaded onto the ethylene-vinyl alcohol copolymer by using a saturated impregnation method, the solvent is then removed by drying, such that the ethylene-vinyl alcohol copolymer composition is prepared.

Various methods known in the prior art may be used for preparing the ethylene-vinyl acetate copolymer through the polymerization reaction, the methods may be solution polymerization method, emulsion polymerization method or suspension polymerization method, the solution polymerization method is preferred. Preferably, the solvent used in the polymerization reaction is an alcohol solvent. The alcohol solvent may be an alcohol containing 1-4 carbon atoms, such as methanol, ethanol, propanol, ethylene glycol, n-butanol, t-butanol, or a mixed solvent of the two alcohols, or the alcohol comprising said alcohol as the main ingredient and further comprising small amount of other ingredients.

The initiator used in the polymerization reaction may be an azo type initiator or a peroxide type initiator.

Further, the azo type initiator includes an oil-soluble initiator, such as azobisisobutyronitrile, azobisisovaleronitrile, 1-((cyano-1-methylethyl)azo)formamide, 1,1'-azobis(4-cyclohexane carbonitrile),
dimethyl 2,2'-azobis(2-methylpropionate).

Further, the peroxide type initiator includes an organic peroxide (e.g., benzoyl peroxide, tert-butyl benzoyl peroxide ester, methyl ethyl ketone peroxide, diisobutyryl peroxide, tert-amyl peroxydecanoate, bis (4-tert-butylcyclohexyl) peroxydicarbonate, tert-amyl peroxypivalate, tert-butyl peroxyacetate, dibutyl peroxydicarbonate) or an inorganic peroxide (e.g., hydrogen peroxide, ammonium persulfate, potassium persulfate).

Further, the initiator comprises an organic peroxy-based initiator.

Further, the proportioning relations in parts by mass are as follows: 10-40 parts of solvent, 60-200 parts of vinyl acetate monomer, 0.01-0.3 parts of initiator, and 5-60 parts of ethylene monomer.

Further, the proportioning relations in parts by mass are as follows: 10-35 parts of the solvent, 80-150 parts of the vinyl acetate monomer, 0.03-0.2 parts of the initiator, and 20-40 parts of the ethylene monomer.

The alcoholysis and the molding granulation processes are generally known among those skilled in the art, the content will not be repeated herein.

Unless otherwise specified in the present invention, the parts are referred to as parts by mass, parts by weight.

The invention will be further described in detail below with reference to the examples. In the examples, the initial decomposition temperature and the maximum decomposition temperature were measured with the following methods: a thermogravimetric analyzer was used, the temperature was raised from room temperature to 800°C at a temperature-rise rate of 10°C/min in a nitrogen gas atmosphere; the temperature when 5% (w) of the sample was decomposed was denoted as the initial decomposition temperature T₀ (°C), and the temperature when 50% (w) of the sample was decomposed was denoted as the maximum decomposition temperature T₁ (°C).

The measuring method of the Yellowness Index (YI) was as follows: 10-15g of the sample was weighted, the initial yellowness index and the yellowness index (YI) after 5-hour thermal treatment at 150°C of the sample were tested with a colorimeter. A smaller value of YI indicated a lower value of yellowness.

The contents of sodium and potassium ions were measured with the following method: an EVOH sample was crushed and passed through a 100 mesh sieve, 10g of sample and 50ml of ion exchange water were weighted, and subjected to stirring and reflux extraction in water bath of 95°C for 10 hours. The extracted solution was diluted 5 times (by volume) with ion exchange water, and tested using an Inductively Coupled Plasma Atomic Emission Spectrometer (ICP-0ES).

The contents of monocarboxylic acid, phosphoric acid, and acyl-containing carboxylic acid were measured with the following methods: the EVOH sample was crushed and passed through a sieve, 10g of sample and 50ml of deionized water were weighted, and subjected to stirring and reflux extraction in water bath of 95°C for 10 hours. The extracted solution was diluted 5 times (by volume) with deionized water, the testing was performed by using an ion chromatography, wherein the chromatographic column was Metrosep A Supp/250,4 the mobile phase was a mixed solution of Na₂CO₃ and NaHCO₃, the calibration fluid was an aqueous solution of sodium acetate.

The testing method of boric acid was as follows: 100g of sample was weighted, it was ashed in a muffle furnace, then the ash was dissolved in 200ml of aqueous nitric acid solution with a concentration of 0.01 equivalent, the content of element boron was analyzed by using an atomic absorption spectrum, the content was converted into the weight of boric acid, in order to obtain the content of said boron compound.

### Example 1

A. polymerization: 25 parts of methanol, 190 parts of vinyl acetate, 0.05 parts of tert-amyl peroxyneodecanoate were added into a polymerization kettle provided with a stirrer. The ethylene was introduced to maintain the pressure in the polymerization kettle at 3.7MPa, the polymerization reaction was performed at a temperature of 60°C for 5h, an ethylene-vinyl acetate copolymer solution was obtained. The ethylene and vinyl acetate monomers were removed by reducing the pressure and distillation to obtain an ethylene-vinyl acetate copolymer solution.
B. alcoholysis: the ethylene-vinyl acetate copolymer solution obtained in step A was adjusted to have a mass fraction of 40%, a sodium hydroxide-methanol solution (sodium hydroxide was used as a solute) with a concentration of 40g/L was then added and subjected to alcoholysis, the sodium hydroxide-methanol solution is used in an amount such that a molar ratio of sodium hydroxide in the sodium hydroxide-methanol solution to vinyl acetate groups contained in the ethylene-vinyl acetate copolymer was 0.05:1, the reaction was performed for 4 hours till the completion of alcoholysis.
C. granulation: after the ethylene vinyl acetate copolymer was subjected to alcoholysis, the obtained ethylene vinyl alcohol copolymer solution passed through an extrusion device with a perforated plate and was extruded into an aqueous solution with a temperature of 5°C, the copolymer was precipitated and formed a strip shape, which was subsequently cut into granules in a conventional cutting pattern.
D. water scrubbing: the ethylene-vinyl alcohol copolymer granules were subsequently scrubbed in a kettle vessel provided with a stirring device by adding 5 times of water by mass, each time of water scrubbing was implemented for 2 hours, the water scrubbing was repeated for 2 times.
E. acid pickling: the ethylene-vinyl alcohol copolymer granules were washed in a kettle vessel provided with a stirring device by adding 5 times of water by mass, 0.015 parts by mass of acetic acid and 0.007 parts by mass of acetoacetic acid relative to the EVOH (1 part by mass) were added into the water scrubbing solution, in order to perform the acid pickling for 2 hours, the centrifugal dewatering was carried out after completion of the acid pickling process.
F. conditioning: the EVOH granules after centrifugal dewatering were then added with an aqueous solution comprising 0.0013 parts of potassium carbonate, 0.0001 parts of boric acid and 0.0006 parts of sodium dihydrogen phosphate relative to the EVOH (1 part by mass), mixed thoroughly and uniformly and subjected to the saturation impregnation, followed by drying treatment at 115°C for 24 hours, the EVOH resin composition was prepared.

### Example 2 - Reference Example 12

The EVOH resin composition was prepared according to the method in Example 1, except that the kinds and used amounts of monocarboxylic acid, acyl-containing carboxylic acid and potassium source in step E were as shown in Table 1, and the properties of the prepared EVOH resin composition were as shown in Table 2.

### Comparative Example 1

The EVOH resin composition was prepared according to the method of Example 1, except that the kinds and used amounts of monocarboxylic acid and acyl-containing carboxylic acid in step E and the potassium source in step F were as shown in Table 1, and the properties of the prepared EVOH resin composition were as shown in Table 2.

**Table 1**

| | Monocarb oxylic acid | Acyl-containin g carboxylic acid | Potassium source | Boron source | Phosphorus source |
|---|---|---|---|---|---|
| Example 1 | 0.015 parts of acetic acid | 0.007 parts of acetoacetic acid | 0.0013 parts of potassium carbonate | 0.0001 parts of boric acid | 0.0006 parts of sodium dihydrogen phosphate |
| Example 2 | 0.04 parts of acetic acid | 0.008 parts of acetylsalicylic acid | 0.0012 parts of potassium bicarbonate | 0.0008 parts of metaboric acid | 0.0008 parts of phosphoric acid |
| Example 3 | 0.02 parts of propionic acid | 0.007 parts of levulinic acid | 0.0012 parts of potassium dihydrogen phosphate | 0.0002 parts of boric acid | 0.0004 parts of potassium dihydrogen phosphate |
| Example 4 | 0.02 parts of propionic acid | 0.007 parts of levulinic acid | 0.0012 parts of potassium dihydrogen phosphate | 0.0025 parts of boric acid | 0.0004 parts of potassium dihydrogen phosphate |
| Example 5 | 0.02 parts of propionic acid | 0.007 parts of levulinic acid | 0.0012 parts of potassium dihydrogen phosphate | - | 0.0004 parts of potassium dihydrogen phosphate |
| Example 6 | 0.02 parts of propionic acid | 0.007 parts of levulinic acid | 0.0017 parts of potassium dihydrogen phosphate | 0.0002 parts of boric acid | - |
| Example 7 | 0.02 parts of acetic acid | 0.007 parts of levulinic acid | Same as Example 3 | 0.0002 parts of boric acid | 0.0004 parts of potassium dihydrogen phosphate |
| Example 8 | 0.05 parts of acetic acid | 0.03 parts of acetoacetic acid | 0.004 parts of potassium carbonate | - | - |
| Example 9 | 0.005 parts of acetic acid | 0.003 parts of acetylsalicylic acid | 0.004 parts of potassium bicarbonate | - | - |
| Example 10 | 0.015 parts of acetic acid | 0.004 parts of levulinic acid | 0.005 parts of potassium dihydrogen phosphate | - | - |
| Reference Example 11 | 0.015 parts of acetic acid | - | 0.004 parts of potassium bicarbonate | - | - |
| Reference Example 12 | 0.015 parts of acetic acid | - | 0.005 parts of potassium dihydrogen phosphate | - | - |
| Comparative Example 1 | 0.015 parts of acetic acid | - | - | - | - |

**Table 2**

| | Mon ocarb oxyli c acid, ppm | Acyl-c ontaini ng carbox ylic acid, ppm | Na, ppm | K, ppm | B, ppm | P, ppm | T₀, °C | T₁, °C | Yellowness Index (YI) | |
|---|---|---|---|---|---|---|---|---|---|---|
| | | | | | | | | | Bef ore the ther mal treat men t | Afte r the ther mal treat men t |
| Example 1 | 300 | 200 | 300 | 610 | 50 | 200 | 390 | 427 | 6 | 12 |
| Example 2 | 800 | 300 | 180 | 550 | 400 | 300 | 395 | 430 | 5 | 12 |
| Example 3 | 400 | 250 | 240 | 730 | 100 | 150 | 392 | 429 | 5 | 11 |
| Example 4 | 400 | 250 | 240 | 730 | 1000 | 150 | 390 | 426 | 5 | 12 |
| Example 5 | 400 | 250 | 240 | 730 | - | 150 | 337 | 409 | 8 | 17 |
| Example 6 | 400 | 250 | 240 | 730 | 100 | - | 350 | 411 | 9 | 18 |
| Example 7 | 400 | 250 | 240 | 730 | 100 | 150 | 330 | 405 | 8 | 18 |
| Example 8 | 1000 | 800 | 1000 | 1500 | - | - | 372 | 416 | 10 | 18 |
| Example 9 | 100 | 100 | 1400 | 1500 | - | - | 350 | 411 | 12 | 20 |
| Example 10 | 270 | 150 | 800 | 2000 | - | - | 385 | 423 | 9 | 17 |
| reference Example 11 | 270 | - | 1400 | 1500 | - | - | 361 | 413 | 10 | 19 |
| Reference Example 12 | 250 | - | 800 | 2000 | - | - | 368 | 410 | 10 | 19 |
| Comparative Example 1 | 250 | - | 800 | - | - | - | 302 | 368 | 18 | 38 |

As can be seen from the data in Table 2 mentioned above, the method provided by the present invention can be used for preparing the EVOH resin composition having improved heat resistance and thermal yellowing resistance can be obtained using.

## Claims

1. An ethylene-vinyl alcohol copolymer composition, the composition contains an ethylene-vinyl alcohol copolymer, element potassium and element sodium, **characterized in that** the mass ratio of element sodium to element potassium is 0.1:1 to 1:1, preferably 0.2:1 to 0.8:1, more preferably 0.3:1 to 0.5:1;
the composition further comprises a monocarboxylic acid R1COOH, R1 represents a C1-5 alkyl group, wherein the monocarboxylic acid is contained in an amount of 100-3,000ppm, relative to the mass of ethylene-vinyl alcohol copolymer;
the composition further comprises an acyl-containing carboxylic acid; wherein the acyl-containing carboxylic acid is contained in an amount of 50-1,000ppm, relative to the mass of ethylene-vinyl alcohol copolymer;
the total amount of element potassium and element sodium is 100-3,000ppm, relative to the mass of ethylene-vinyl alcohol copolymer;
the contents of element potassium and element sodium are measured using the Inductively Coupled Plasma Atomic Emission Spectrometry (ICP-0ES);
the contents of the monocarboxylic acid are measured with the ion chromatography;
the contents of the acyl-containing carboxylic acid is measured with the ion chromatography.

2. The composition of claim 1, wherein the total amount of element potassium and element sodium is 200-2,000ppm, more preferably 500-1,000ppm, relative to the mass of ethylene-vinyl alcohol copolymer.

3. The composition of claim 1 or 2, wherein the element potassium is present in an ionic form, preferably in a form of potassium salt, the potassium salt is preferably potassium carbonate and/or potassium bicarbonate.

4. The composition according to any one of claims 1-3, wherein the monocarboxylic acid is preferably one or more selected from the group consisting of formic acid, acetic acid, propionic acid and butyric acid; the monocarboxylic acid is further contained in an amount of 150-2,000ppm, more preferably 300-1,000ppm, relative to the mass of ethylene-vinyl alcohol copolymer.

5. The composition according to any one of claims 1-to 4, wherein the acyl-containing carboxylic acid is one or more selected from the group consisting of acetoacetic acid, acetylsalicylic acid, levulinic acid, acetobutyric acid, acetylsuccinic acid and acetylbenzoic acid.

6. The composition of claims 1 to 4, wherein the acyl-containing carboxylic acid is represented by the structural formula R₂COR₃COOH, wherein R₂ is a C1-5 alkyl group, R₃ is a C1-5 alkylidene group, and further preferably, R₃ and R₁ have the same number of carbon atoms.

7. The composition of claim 5 or 6, wherein the acyl-containing carboxylic acid is contained in an amount of 100-500ppm, more preferably 200-350ppm, relative to the mass of ethylene-vinyl alcohol copolymer.

8. The composition according to any of claims 1-7, wherein the composition further comprises element boron and/or element phosphorus; the content of element boron calculated in terms of boric acid H₃BO₃ is 50-1,000ppm, preferably 50-500ppm, and the content of element phosphorus calculated in terms of H₃PO₄ is 50-1,000ppm, preferably 100-500ppm, relative to the mass of the ethylene-vinyl alcohol copolymer, wherein the contents of the phosphorus compound is measured with the ion chromatography, and the contents of the boron compound are determined by atomic emission spectroscopy after ashing the sample.

9. A preparation method of ethylene-vinyl alcohol copolymer composition, **characterized in that** the method comprises subjecting the ethylene-vinyl acetate copolymer obtained from the polymerization reaction to an alcoholysis and molding granulation, then washing to remove most of element sodium, subsequently adding a potassium source in an amount such that the mass ratio of element sodium to element potassium is 0.1:1 to 1:1, preferably 0.2:1 to 0.8:1, more preferably 0.3:1 to 0.5:1; wherein the washing generally includes water scrubbing and acid pickling; and the acid pickling is carried out using a monocarboxylic acid and an acyl-containing carboxylic acid; wherein the washing is performed such that the total amount of element potassium and element sodium is 100-3,000ppm, relative to the mass of ethylene-vinyl alcohol copolymer.

10. The preparation method of claim 9, wherein the potassium source is a potassium salt, the potassium salt is preferably potassium carbonate and/or potassium bicarbonate.

11. The preparation method of claim 9 or 10, wherein the washing is performed such that the total amount of element potassium and element sodium is 200-2,000ppm, more preferably 1,000-2,000ppm, relative to the mass of ethylene-vinyl alcohol copolymer.

12. The preparation method according to any one of claims 9-11, wherein the washing includes water scrubbing and acid pickling, the acid pickling is performed by using a monocarboxylic acid R₁COOH and an acyl-containing carboxylic acid, wherein R₁ is a C1-5 alkyl group, the mass ratio of monocarboxylic acid and ethylene-vinyl alcohol copolymer is 0.0001:1 to 0.1:1, preferably 0.001:1 to 0.05:1, more preferably 0.015:1 to 0.05:1; the mass ratio of acyl-containing carboxylic acid and monocarboxylic acid is 0.1:1 to 1:1, preferably 0.2:1 to 0.8:1, more preferably 0.2:1 to 0.5:1.

13. The preparation method of claim 12, wherein the monocarboxylic acid is one or more selected from the group consisting of formic acid, acetic acid and propionic acid; the acyl-containing carboxylic acid is one or more selected from the group consisting of acetoacetic acid, acetylsalicylic acid, levulinic acid, acetylsuccinic acid and acetylbenzoic acid.

14. The preparation method of claim 12, wherein the acyl-containing carboxylic acid is represented by the structural formula R₂COR₃COOH, wherein R₂ is a C1-5 alkyl group, R₃ is a C1-5 alkylidene group, and further preferably, R₃ and R₁ have the same number of carbon atoms.

15. The preparation method according to any one of claims 12-14, wherein the method further comprises adding a phosphorus-containing compound and/or a boron-containing compound into the ethylene-vinyl acetate copolymer obtained after the acid pickling process; preferably, the phosphorus-containing compound is added in an amount of 0.0002-0.001 parts by weight, and the boron-containing compound is added in an amount of 0.0001-0.001 parts by weight, relative to 1 part by weight of the ethylene-vinyl acetate copolymer.

16. The preparation method according to any one of claims 9-15, wherein the solvent used in the polymerization reaction is an alcohol solvent, and the initiator used in the polymerization reaction is an azo type initiator or a peroxide type initiator.

## Patentansprüche

1. Ethylen-Vinylalkohol-Copolymer-Zusammensetzung, wobei die Zusammensetzung ein Ethylen-Vinylalkohol-Copolymer, das Element Kalium und das Element Natrium enthält, **dadurch gekennzeichnet, dass** das Massenverhältnis des Elements Natrium zum Element Kalium 0,1:1 bis 1:1, vorzugsweise 0,2:1 bis 0,8:1, mehr bevorzugt 0,3:1 bis 0,5:1 beträgt;
die Zusammensetzung umfasst ferner eine Monocarbonsäure R1COOH, wobei R1 eine C1-5-Alkylgruppe darstellt und die Monocarbonsäure in einer Menge von 100-3000 ppm, bezogen auf die Masse des Ethylen-Vinylalkohol-Copolymers, enthalten ist;
die Zusammensetzung umfasst ferner eine acylhaltige Carbonsäure; wobei die acylhaltige Carbonsäure in einer Menge von 50-1000 ppm, bezogen auf die Masse des Ethylen-Vinylalkohol-Copolymers, enthalten ist;
die Gesamtmenge des Elements Kalium und des Elements Natrium beträgt 100-3000 ppm, bezogen auf die Masse des Ethylen-Vinylalkohol-Copolymers;
die Gehalte an Element Kalium und Element Natrium werden mittels induktiv gekoppelter Plasma-Atomemissionsspektrometrie (ICP-OES) gemessen;
die Gehalte der Monocarbonsäure werden mittels Ionenchromatographie gemessen;
die Gehalte der acylhaltigen Carbonsäure werden mittels Ionenchromatographie gemessen.

2. Zusammensetzung nach Anspruch 1, wobei die Gesamtmenge an Element Kalium und Element Natrium 200-2000 ppm, mehr bevorzugt 500-1000 ppm, bezogen auf die Masse des Ethylen-Vinylalkohol-Copolymers, beträgt.

3. Zusammensetzung nach Anspruch 1 oder 2, wobei das Element Kalium in ionischer Form vorliegt, vorzugsweise in Form eines Kaliumsalzes, wobei das Kaliumsalz vorzugsweise Kaliumcarbonat und/oder Kaliumbicarbonat ist.

4. Zusammensetzung nach einem der Ansprüche 1-3, wobei die Monocarbonsäure vorzugsweise eine oder mehrere ausgewählt aus der Gruppe bestehend aus Ameisensäure, Essigsäure, Propionsäure und Buttersäure ist; die Monocarbonsäure ist ferner in einer Menge von 150-2000 ppm, mehr bevorzugt 300-1000 ppm, bezogen auf die Masse des Ethylen-Vinylalkohol-Copolymers, enthalten.

5. Zusammensetzung nach einem der Ansprüche 1 bis 4, wobei die acylhaltige Carbonsäure eine oder mehrere ausgewählt aus der Gruppe bestehend aus Acetessigsäure, Acetylsalicylsäure, Levulinsäure, Acetobuttersäure, Acetylbernsteinsäure und Acetylbenzoesäure ist.

6. Zusammensetzung nach den Ansprüchen 1 bis 4, wobei die acylhaltige Carbonsäure durch die Strukturformel R₂COR₃COOH dargestellt wird, wobei R₂ eine C1-5-Alkylgruppe ist, R₃ eine C1-5-Alkylidengruppe ist und ferner vorzugsweise R₃ und R₁ die gleiche Anzahl an Kohlenstoffatomen aufweisen.

7. Zusammensetzung nach Anspruch 5 oder 6, wobei die acylhaltige Carbonsäure in einer Menge von 100-500 ppm, mehr bevorzugt 200-350 ppm, bezogen auf die Masse des Ethylen-Vinylalkohol-Copolymers, enthalten ist.

8. Zusammensetzung nach einem der Ansprüche 1-7, wobei die Zusammensetzung ferner das Element Bor und/oder das Element Phosphor umfasst; der Gehalt an Bor, berechnet als Borsäure H₃BO₃, beträgt 50-1000 ppm, vorzugsweise 50-500 ppm, und der Gehalt an Phosphor, berechnet als H₃PO₄, beträgt 50-1000 ppm, vorzugsweise 100-500 ppm, bezogen auf die Masse des Ethylen-Vinylalkohol-Copolymers, wobei der Gehalt der Phosphorverbindung mittels Ionenchromatographie gemessen wird und der Gehalt der Borverbindung nach der Veraschung der Probe durch Atomemissionsspektroskopie bestimmt wird.

9. Herstellungsverfahren für die Ethylen-Vinylalkohol-Copolymer-Zusammensetzung, **dadurch gekennzeichnet, dass** das Verfahren umfasst: Unterziehen des aus der Polymerisationsreaktion erhaltenen Ethylen-Vinylacetat-Copolymers einer Alkoholyse und einer Formgranulierung, anschließendes Waschen, um den größten Teil des Elements Natrium zu entfernen, anschließendes Zufügen einer Kaliumquelle in einer solchen Menge, dass das Massenverhältnis des Elements Natrium zum Element Kalium 0,1:1 bis 1:1, vorzugsweise 0,2:1 bis 0,8:1, mehr bevorzugt 0,3:1 bis 0,5:1 beträgt; wobei das Waschen im Allgemeinen ein Waschen mit Wasser und ein Säurebeizen umfasst, und das Säurebeizen unter Verwendung einer Monocarbonsäure und einer acylhaltigen Carbonsäure durchgeführt wird; wobei das Waschen so durchgeführt wird, dass die Gesamtmenge des Elements Kalium und des Elements Natrium 100-3000 ppm, bezogen auf die Masse des Ethylen-Vinylalkohol-Copolymers, beträgt.

10. Herstellungsverfahren nach Anspruch 9, wobei die Kaliumquelle ein Kaliumsalz ist, wobei das Kaliumsalz vorzugsweise Kaliumcarbonat und/oder Kaliumbicarbonat ist.

11. Herstellungsverfahren nach Anspruch 9 oder 10, wobei das Waschen so durchgeführt wird, dass die Gesamtmenge des Elements Kalium und des Elements Natrium 200-2000 ppm, mehr bevorzugt 1000-2000 ppm, bezogen auf die Masse des Ethylen-Vinylalkohol-Copolymers, beträgt.

12. Herstellungsverfahren nach einem der Ansprüche 9-11, wobei das Waschen ein Waschen mit Wasser und ein Säurebeizen einschließt, das Säurebeizen unter Verwendung einer Monocarbonsäure R₁COOH und einer acylhaltigen Carbonsäure durchgeführt wird, wobei R₁ eine C1-5-Alkylgruppe ist, das Massenverhältnis von Monocarbonsäure zu Ethylen-Vinylalkohol-Copolymer 0,0001:1 bis 0,1:1, vorzugsweise 0,001:1 bis 0,05:1, mehr bevorzugt 0,015:1 bis 0,05:1 beträgt; und das Massenverhältnis von acylhaltiger Carbonsäure zu Monocarbonsäure 0,1:1 bis 1:1, vorzugsweise 0,2:1 bis 0,8:1, mehr bevorzugt 0,2:1 bis 0,5:1 beträgt.

13. Herstellungsverfahren nach Anspruch 12, wobei die Monocarbonsäure eine oder mehrere ausgewählt aus der Gruppe bestehend aus Ameisensäure, Essigsäure und Propionsäure ist; und die acylhaltige Carbonsäure eine oder mehrere ausgewählt aus der Gruppe bestehend aus Acetessigsäure, Acetylsalicylsäure, Levulinsäure, Acetylbernsteinsäure und Acetylbenzoesäure ist.

14. Herstellungsverfahren nach Anspruch 12, wobei die acylhaltige Carbonsäure durch die Strukturformel R₂COR₃COOH dargestellt wird, wobei R₂ eine C1-5-Alkylgruppe ist, R₃ eine C1-5-Alkylidengruppe ist und ferner vorzugsweise R₃ und R₁ die gleiche Anzahl an Kohlenstoffatomen aufweisen.

15. Herstellungsverfahren nach einem der Ansprüche 12-14, wobei das Verfahren ferner das Hinzufügen einer phosphorhaltigen Verbindung und/oder einer borhaltigen Verbindung zu dem nach dem Säurebeizprozess erhaltenen Ethylen-Vinylacetat-Copolymer umfasst; vorzugsweise wird die phosphorhaltige Verbindung in einer Menge von 0,0002-0,001 Gewichtsteilen und die borhaltige Verbindung in einer Menge von 0,0001-0,001 Gewichtsteilen, bezogen auf 1 Gewichtsteil des Ethylen-Vinylacetat-Copolymers, zugegeben.

16. Herstellungsverfahren nach einem der Ansprüche 9-15, wobei das bei der Polymerisationsreaktion verwendete Lösungsmittel ein alkoholisches Lösungsmittel ist, und der bei der Polymerisationsreaktion verwendete Initiator ein Initiator vom Azo-Typ oder ein Initiator vom Peroxid-Typ ist.

## Revendications

1. Composition de copolymère éthylène-alcool vinylique, la composition contenant un copolymère éthylène-alcool vinylique, l'élément potassium et l'élément sodium, **caractérisée en ce que** le rapport massique de l'élément sodium à l'élément potassium est de 0,1:1 à 1:1, de préférence de 0,2:1 à 0,8:1, plus préférentiellement de 0,3:1 à 0,5:1 ;
la composition comprend en outre un acide monocarboxylique R1COOH, R1 représentant un groupe alkyle en C1-5, dans laquelle l'acide monocarboxylique est contenu en une quantité de 100 à 3 000 ppm, par rapport à la masse de copolymère éthylène-alcool vinylique ;
la composition comprend en outre un acide carboxylique contenant un groupe acyle ; dans laquelle l'acide carboxylique contenant un groupe acyle est contenu en une quantité de 50 à 1 000 ppm, par rapport à la masse de copolymère éthylène-alcool vinylique ;
la quantité totale d'élément potassium et d'élément sodium est de 100 à 3 000 ppm, par rapport à la masse de copolymère éthylène-alcool vinylique ;
les teneurs en élément potassium et en élément sodium sont mesurées par spectrométrie d'émission atomique à plasma à couplage inductif (ICP-OES) ;
les teneurs en acide monocarboxylique sont mesurées par chromatographie ionique ;
les teneurs en acide carboxylique contenant un groupe acyle sont mesurées par chromatographie ionique.

2. Composition selon la revendication 1, dans laquelle la quantité totale d'élément potassium et d'élément sodium est de 200 à 2 000 ppm, plus préférentiellement de 500 à 1 000 ppm, par rapport à la masse de copolymère éthylène-alcool vinylique.

3. Composition selon la revendication 1 ou 2, dans laquelle l'élément potassium est présent sous forme ionique, de préférence sous forme de sel de potassium, le sel de potassium étant de préférence du carbonate de potassium et/ou du bicarbonate de potassium.

4. Composition selon l'une quelconque des revendications 1 à 3, dans laquelle l'acide monocarboxylique est de préférence un ou plusieurs acides choisis dans le groupe constitué par l'acide formique, l'acide acétique, l'acide propionique et l'acide butyrique ; l'acide monocarboxylique est en outre contenu en une quantité de 150 à 2 000 ppm, plus préférentiellement de 300 à 1 000 ppm, par rapport à la masse de copolymère éthylène-alcool vinylique.

5. Composition selon l'une quelconque des revendications 1 à 4, dans laquelle l'acide carboxylique contenant un groupe acyle est un ou plusieurs acides choisis dans le groupe constitué par l'acide acétoacétique, l'acide acétylsalicylique, l'acide lévulinique, l'acide acétobutyrique, l'acide acétylsuccinique et l'acide acétylbenzoïque.

6. Composition selon les revendications 1 à 4, dans laquelle l'acide carboxylique contenant un groupe acyle est représenté par la formule structurale R₂COR₃COOH, dans laquelle R₂ est un groupe alkyle en C1-5, R₃ est un groupe alkylidène en C1-5 et, de préférence en outre, R₃ et R₁ ont le même nombre d'atomes de carbone.

7. Composition selon la revendication 5 ou 6, dans laquelle l'acide carboxylique contenant un groupe acyle est contenu en une quantité de 100 à 500 ppm, plus préférentiellement de 200 à 350 ppm, par rapport à la masse de copolymère éthylène-alcool vinylique.

8. Composition selon l'une quelconque des revendications 1 à 7, dans laquelle la composition comprend en outre l'élément bore et/ou l'élément phosphore ; la teneur en élément bore, exprimée en acide borique H₃BO₃, est de 50 à 1 000 ppm, de préférence de 50 à 500 ppm, et la teneur en élément phosphore, exprimée en H₃PO₄, est de 50 à 1 000 ppm, de préférence de 100 à 500 ppm, par rapport à la masse du copolymère éthylène-alcool vinylique, dans laquelle les teneurs en composé du phosphore sont mesurées par chromatographie ionique, et les teneurs en composé du bore sont déterminées par spectroscopie d'émission atomique après incinération de l'échantillon.

9. Procédé de préparation d'une composition de copolymère éthylène-alcool vinylique, **caractérisé en ce que** le procédé comprend les étapes consistant à soumettre le copolymère éthylène-acétate de vinyle obtenu par la réaction de polymérisation à une alcoolyse et à une granulation par moulage, puis à laver pour éliminer la majeure partie de l'élément sodium, puis à ajouter une source de potassium en une quantité telle que le rapport massique de l'élément sodium à l'élément potassium soit de 0,1:1 à 1:1, de préférence de 0,2:1 à 0,8:1, plus préférentiellement de 0,3:1 à 0,5:1 ; dans lequel le lavage comprend généralement un rinçage à l'eau et un lavage acide ; et le lavage acide est effectué à l'aide d'un acide monocarboxylique et d'un acide carboxylique contenant un groupe acyle ; dans lequel le lavage est effectué de sorte que la quantité totale d'élément potassium et d'élément sodium soit de 100 à 3 000 ppm, par rapport à la masse de copolymère éthylène-alcool vinylique.

10. Procédé de préparation selon la revendication 9, dans lequel la source de potassium est un sel de potassium, le sel de potassium étant de préférence du carbonate de potassium et/ou du bicarbonate de potassium.

11. Procédé de préparation selon la revendication 9 ou 10, dans lequel le lavage est effectué de sorte que la quantité totale d'élément potassium et d'élément sodium soit de 200 à 2 000 ppm, plus préférentiellement de 1 000 à 2 000 ppm, par rapport à la masse de copolymère éthylène-alcool vinylique.

12. Procédé de préparation selon l'une quelconque des revendications 9 à 11, dans lequel le lavage comprend un rinçage à l'eau et un lavage acide, le lavage acide étant effectué à l'aide d'un acide monocarboxylique R₁COOH et d'un acide carboxylique contenant un groupe acyle, où R₁ est un groupe alkyle en C1-5, le rapport massique entre l'acide monocarboxylique et le copolymère éthylène-alcool vinylique est de 0,0001:1 à 0,1:1, de préférence de 0,001:1 à 0,05:1, plus préférentiellement de 0,015:1 à 0,05:1 ; le rapport massique entre l'acide carboxylique contenant un groupe acyle et l'acide monocarboxylique est de 0,1:1 à 1:1, de préférence de 0,2:1 à 0,8:1, plus préférentiellement de 0,2:1 à 0,5:1.

13. Procédé de préparation selon la revendication 12, dans lequel l'acide monocarboxylique est un ou plusieurs acides choisis dans le groupe constitué par l'acide formique, l'acide acétique et l'acide propionique ; l'acide carboxylique contenant un groupe acyle est un ou plusieurs acides choisis dans le groupe constitué par l'acide acétoacétique, l'acide acétylsalicylique, l'acide lévulinique, l'acide acétylsuccinique et l'acide acétylbenzoïque.

14. Procédé de préparation selon la revendication 12, dans lequel l'acide carboxylique contenant un groupe acyle est représenté par la formule structurale R₂COR₃COOH, dans laquelle R₂ est un groupe alkyle en C1-5, R₃ est un groupe alkylidène en C1-5 et, de préférence en outre, R₃ et R₁ ont le même nombre d'atomes de carbone.

15. Procédé de préparation selon l'une quelconque des revendications 12 à 14, dans lequel le procédé comprend en outre l'ajout d'un composé contenant du phosphore et/ou d'un composé contenant du bore dans le copolymère éthylène-acétate de vinyle obtenu après le processus de lavage acide ; de préférence, le composé contenant du phosphore est ajouté en une quantité de 0,0002 à 0,001 partie en poids, et le composé contenant du bore est ajouté en une quantité de 0,0001 à 0,001 partie en poids, par rapport à 1 partie en poids du copolymère éthylène-acétate de vinyle.

16. Procédé de préparation selon l'une quelconque des revendications 9 à 15, dans lequel le solvant utilisé dans la réaction de polymérisation est un solvant alcoolique, et l'amorceur utilisé dans la réaction de polymérisation est un amorceur de type azoïque ou un amorceur de type peroxyde.
